# EUROPÄISCHE PATENTANMELDUNG

(11) **EP 2 073 335 A2**
(43) Veröffentlichungstag der Anmeldung: **24.06.2009**
(21) Anmeldenummer: 08021987.6
(22) Anmeldetag: 18.12.2008
(51) Int. Cl.: H02G 3/18

(54) **Elektrisches Installationsgerät**

(30) Priorität: 21.12.2007 DE 102007063590
(71) Anmelder: Merten GmbH & Co. KG, 51674 Wiehl (DE)
(72) Erfinder: Lamers, Jörg, 51427 Bergisch Gladbach (DE)

(57) **Zusammenfassung**

Die Erfindung betrifft ein Installationsgerät für die Gebäudesystemtechnik, wobei mit dem Installationsgerät (3) ein angeschlossener Verbraucher (17) ein- und ausschaltbar ist. Um ein Installationsgerät (3) einschließlich eines Gerätesystems (1) zu schaffen, das eine komfortable Erfassung und Regelung von Nutzungsdaten ermöglicht, sind in dem Installationsgerät (3) elektrische Parameter erfassbar und/oder regelbar und das Installationsgerät (3) drahtlos kommuniziert.

## Beschreibung

Die Erfindung betrifft ein elektrisches Installationsgerät nach dem Oberbegriff des Patentanspruches 1.

Elektrische Installationsgeräte werden im Rahmen der Gebäudesystemtechnik sowohl bei der Erstausstattung als auch im Nachrüstbereich eingesetzt. Häufig ist es wichtig, das jeweilige elektrische Installationsgerät funktional aufrüsten zu können. Zur Ermittlung von Verbrauchsdaten eines angeschlossenen Verbrauchers sind spezielle Geräte bekannt, die zwischen Verbraucher und Steckdose geschaltet werden. Nachteilig ist dabei insbesondere, dass hiermit nur dezentrale Informationsplätze geschaffen werden und eine komfortable Aufbereitung bzw. Beeinflussung des Nutzungsverhaltens nicht möglich ist.

Neben herkömmlichen leitungsgebundenen Installationssystemen existieren Systeme bei denen Datentelegramme drahtlos mittels Funksignalen von Bedienelementen und Sensoren zur lastschaltenden Aktorik übertragen werden, die dann leitungsgebunden die jeweiligen Verbraucher mit Netzspannung versorgt.

Die Aufgabe der vorliegenden Erfindung besteht deshalb darin, die vorstehend genannten Nachteile zu beseitigen und ein Installationsgerät einschließlich eines Gerätesystems zu schaffen, das eine komfortable Erfassung und Regelung von Nutzungsdaten ermöglicht.

Gelöst wird diese Aufgabe durch die im Patentanspruch 1 angegebenen Merkmale. Vorteilhafte Ausgestaltungen ergeben sich aus den Unteransprüchen.

Die Erfindung gemäß dem Patentanspruch 1 weist den Vorteil auf, dass durch ein erfindungsgemäßes drahtlos kommunizierendes und lastschaltendes Installationsgerät ein Datenaustausch mit weiteren Teilnehmern eines drahtlosen Teilsystems ermöglicht wird und elektrische Parameter jedes einzelnen Verbrauchers jeweils mit einem erfindungsgemäßen Installationsgerät erfasst und an einem Gerät zusammengefasst ausgewertet und verarbeitet werden können.

Dieses Gerät ist vorteilhafterweise an einer zentralen und gut zugänglichen Stelle montiert und mit einer Anzeigeeinheit, beispielsweise einem Display, und Bedienelementen ausgestattet. Dabei existieren verschiedene Anzeigemodi, um die Verbrauchsdaten zu visualisieren. Eine besonders vorteilhafte Ausführung ergibt sich durch eine zusammengefasste Darstellung der Daten einzelner Verbraucher, so dass beispielsweise raum- oder gebäudebezogene Nutzungskonzepte möglich sind.

Die Bedienelemente ermöglichen des weiteren eine fernbedienbare Regelung der Parameter einzelner Verbraucher, um ein spezifisches Verbraucherverhalten zu definieren, in dem beispielsweise größen- oder zeitabhängige Schwellwerte vorgegeben werden, bei denen bestimmte Visualisierungen aktiviert werden oder der Verbraucher abgeschaltet wird. Die Eingaben und die verbraucherspezifischen Werte werden in ein Datentelegramm umgesetzt und drahtlos zu dem jeweiligen Installationsgerät übertragen. So kann auch auf wechselnde Verbraucher an den Verbrauchsstellen reagiert werden, indem verbraucherspezifische Einstellungen vordefiniert abgespeichert werden.

Neben der Parametererfassung ist eine Abschaltung des Verbrauchers durch schaltende Bauelemente, vorzugsweise Relais, möglich. Darüber hinaus ist auch eine Zustandserkennung des Verbrauchers möglich, so dass zwischen eingeschaltetem oder ausgeschaltetem Verbraucher unterschieden werden kann, einschließlich einer Detektierung defekter Verbraucher durch Auswertung des hin- und rückfließenden Stromes.

Durch die vorstehenden Regelungsmöglichkeiten einzelner Verbrauchsstellen und der Datenzusammenführung in einem Gerät lassen sich verbrauchsabhängige Nutzungskonzepte realisieren. Verbrauchsabhängig können beispielsweise farblich unterschiedliche Signale erzeugt werden oder direkt die Verbrauchskosten angezeigt werden, sowie eine zeit- und/oder größenabhängige Abschaltung von Verbrauchern.

Spezifische Parameter von elektrischen Verbrauchern sind der elektrische Strom und die elektrische Leistung, so dass bevorzugt diese elektrischen Größen durch geeignete mess- und schalttechnische Bauelemente in dem jeweiligen Installationsgerät ermittelt und geregelt werden. Eine besonders vorteilhafte Methode zur Strommessung erfolgt mittels berührungslos wirkender Hall-Sensoren. Eine Abschaltung des Stromes geschieht durch elektronische Relais. Des weiteren sind Verarbeitungsbausteine für die erfassten Parameter und die Modulation/Demodulation der Daten in Funksignale in dem Installationsgerät integriert. Mit einer Programmlogik können Schwellwerte definiert werden, bei denen das Modul beispielsweise den Stromfluss zum Verbraucher unterbricht. Hierzu sind sowohl in dem Installationsgerät als auch in den drahtlos kommunizierenden Geräten entsprechende, vorzugsweise programmierbare, Bauelemente vorhanden.

Bevorzugterweise werden zur drahtlosen Übermittlung der Daten zwischen den Geräten Funksignale benutzt, da im Rahmen einer Gebäudeinstallation eine weitgehend sichere Übertragung gewährleistet ist. In Funk basierenden Installationsgeräten wird eine eingehende Netzspannung in eine geeignete kleinere Spannung und/oder andere Energieart für die Funkbauelemente umgewandelt. Optional sind visuell oder akustisch wirkende Bauelemente beispielsweise für Zustandsmeldungen angeordnet.

In einer bevorzugten Anwendung sind derartige drahtlos kommunizierende Installationsgeräte als steckbare Geräte ausgeführt, die zwischen Steckdose und Verbraucher angeordnet werden. Vorteilhafterweise wird durch erfindungsgemäße Installationsgeräte mit geringem Installationsaufwand eine Aufrüstung bestehender Geräte möglich.

Eine weitere Anwendung sind lastlastende Aktoren, die festverdrahtet diverse elektrische Verbraucher mit Spannung versorgen. Derartige Geräte sind entweder in unmittelbarer Nähe des Verbrauchers beispielsweise in einem gemeinsamen Installationsgehäuse oder zentral in einem Schaltschrank angeordnet. In einer besonders vorteilhaften Ausführung sind in einem Gehäuse mehrere erfindungsgemäße Installationsgeräte zusammengefasst, so eine platzsparende Ausführung insbesondere für Schaltschränke vorliegt. Auf dieser Basis können auch sogenannte Mehrkanalgeräte geschaffen werden.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:

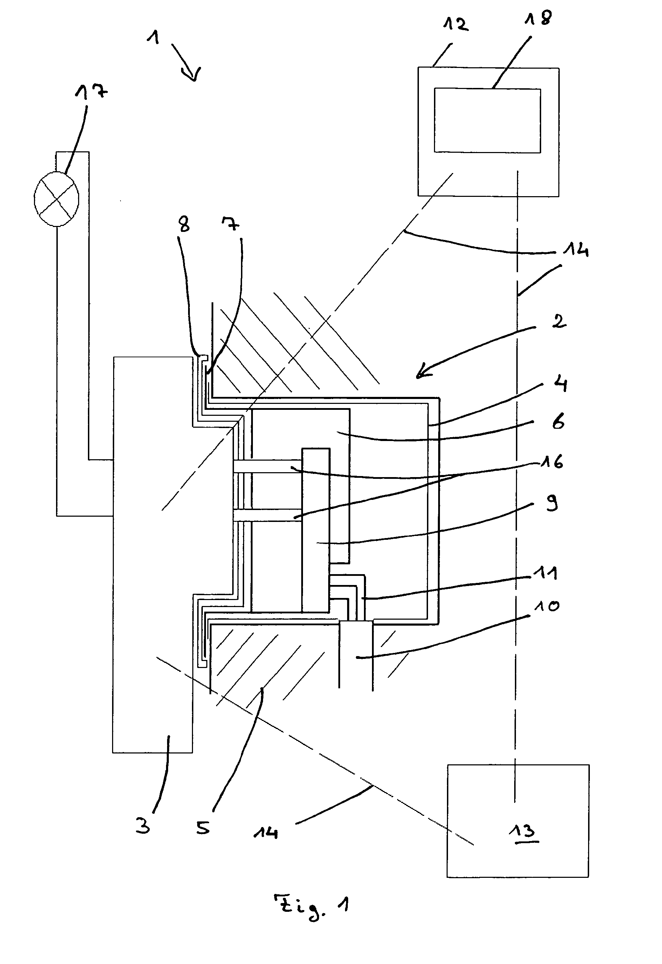

- Figur 1: schematisch ein erfindungsgemäßes Installationsgerät in einer Ausführung als Zwischenstecker.
- Figur 2: ein weiteres Ausführungsbeispiel des Installationsgerätes als festverdrahteter Aktor am Verbraucher.
- Figur 3: ein weiteres Ausführungsbeispiel des Installationsgerätes als festverdrahteter Aktor in einem Schaltschrank.

Gleiche oder gleichwirkende Bauteile sind in der nachfolgenden Beschreibung mit gleichen Bezugszeichen versehen.

Nachfolgend wird der Aufbau und die Funktionsweise der Erfindung anhand einer Geräteanordnung 1 schematisch an zwei Alternativen näher beschrieben. Beispielhaft ist dabei ein erstes elektrisches Installationsgerät 3 in Form eines Zwischensteckers dargestellt, der drahtlos kommuniziert, wobei die Datenübertragung mittels Funksignalen 14 erfolgt.

Die Geräteanordnung 1 weist eine elektrische Steckdose 2 auf, die in einem Installationsgehäuse 4 befestigt ist, welches ortsfest in einer Gebäudewand 5 fixiert ist. Die Steckdose 2 weist einen Gerätesockel 6 auf, den außenseitig ein Tragrahmen 7 umgibt, der die Befestigung der Steckdose 2 in dem Installationsgehäuse 4 ermöglicht. Frontseitig ist ein Frontelement 8 befestigt, das je nach Anwendung ein- oder mehrteilig sein kann. In dem Gerätesockel 6 sind Anschlussklemmen 9 und damit verbundene metallische Kontaktelemente angeordnet, in die frontseitig Anschlusskontakte 16 des Installationsgerätes 3 gesteckt werden. Des weiteren ist in dem Gerätesockel 6 ein Erdungsbügel angeordnet, der zur frontseitigen Kontaktierung eines Erdungskontaktes des Installationsgerätes 3 dient. Eine wandseitig verlegte Versorgungsleitung 10 versorgt die Steckdose 2 mit einer Netzspannung, wobei die einzelnen Leitungen 11 lösbar in den Anschlussklemmen 9 fixiert sind.

Darüber hinaus ist schematisch ein funkbasierendes Teilsystem dargestellt, zu dem neben Geräten 12 und 13 auch das Installationsgerät 3 gehört, zwischen denen mittels Funksignalen 14 Datentelegramme ausgetauscht werden. Das Datentelegramm enthält u. a. Parameter des an der Steckdose 2 angeschlossenen Verbrauchers 17. In dem Installationsgerät 3 sind mess- und schalttechnische Bauelemente angeordnet, die eine Strom- und/oder Leistungsmessung sowie eine Abschaltung des über das Steckdose 2 fließenden Stromes für den angeschlossenen Verbraucher 17 ermöglichen, z. B. Hallsensoren und Relais. Des weiteren sind Verarbeitungsbaustein für die erfassten Parameter und die Modulation/Demodulation der Daten in Funksignale 14 integriert. In dem Gerät 12 werden die Daten des Installationsgerät 3 und des Gerätes 13 ausgewertet und über eine Bedien- und Anzeigeeinheit 18 visualisiert. Mit einer Programmlogik können zeit- und/oder größenabhängige Schwellwerte definiert werden, bei denen einerseits bestimmte Anzeigeoptionen aktiviert werden und andererseits das Installationsgerät 3 den Stromfluss zum Verbraucher 17 unterbricht. Hierzu sind sowohl in dem Installationsgerät 3 als auch in dem Gerät 12 entsprechende, vorzugsweise programmierbare, Bauelemente vorhanden.

Das Installationsgerät 3 ist über Anschlusskontakte 16 lösbar mit den Anschlussklemmen 9 der Steckdose 2 verbunden und somit ebenfalls an das Versorgungsnetz angeschlossen. In dem Installationsgerät 3 sind diverse elektronische Bauteile angeordnet, mit denen eine Transformation der eingehenden Netzspannung in eine geeignete Versorgungsspannung für die Funkbauelemente realisiert wird.

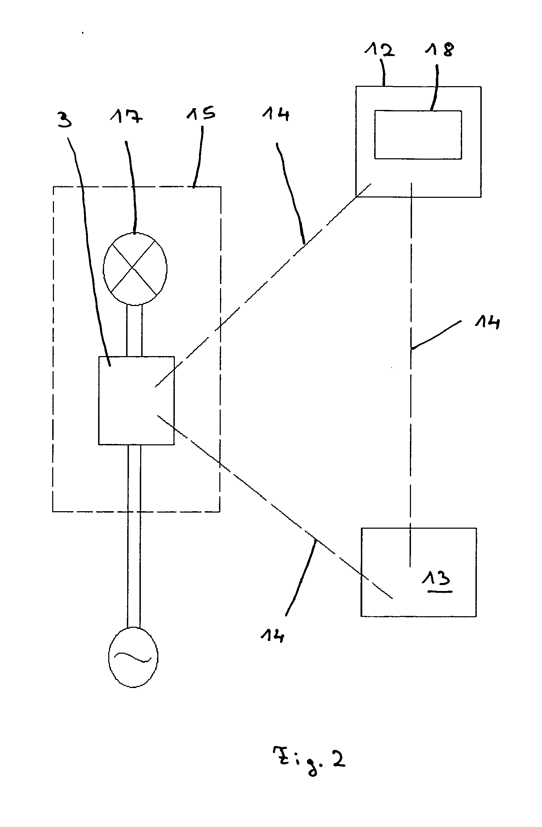

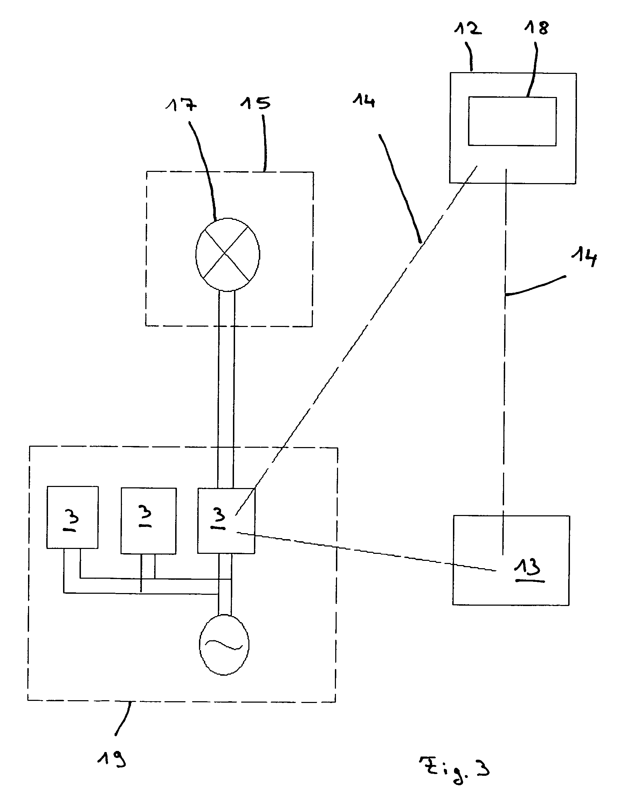

Gemäß Figur 2 ist eine festverdrahtete Anordnung des Installationsgerätes 3 an dem Verbraucher 17 dargestellt, wobei das Installationsgerät 3 direkt am Verbraucher 17 in einem gemeinsamen Installationsgehäuse 15 angeordnet ist. Durch die Anordnung an dem Verbraucher 17 kann die entsprechende Leitungsinstallation und die Netzspannung mitgenutzt werden und separate Installationsarbeiten entfallen. In der Figur 3 ist eine Anordnung dargestellt, bei der das Installationsgerät 3 in einem Schaltschrank 19 entfernt von dem Verbraucher 17 angeordnet ist.

Die vorstehende Beschreibung des Ausführungsbeispieles dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Geräteanordnung
- 2: Steckdose
- 3: Installationsgerät
- 4: Installationsgehäuse
- 5: Gebäudewand
- 6: Gerätesockel
- 7: Tragrahmen
- 8: Frontelement
- 9: Anschlussklemmen
- 10: Versorgungsleitung
- 11: Leitungen
- 12: Gerät
- 13: Gerät
- 14: Funksignal
- 15: Installationsgehäuse
- 16: Anschlusskontakte
- 17: Verbraucher
- 18: Bedien- und Anzeigeeinheit
- 19: Schaltschrank

## Patentansprüche

1. Installationsgerät für die Gebäudesystemtechnik, wobei mit dem Installationsgerät (3) ein angeschlossener Verbraucher (17) ein- und ausschaltbar ist, **dadurch gekennzeichnet, dass** in dem Installationsgerät (3) elektrische Parameter erfassbar und/oder regelbar sind und das Installationsgerät (3) drahtlos kommuniziert.

2. Installationsgerät nach Patentanspruch 1, **dadurch gekennzeichnet, dass** der Parameter der elektrische Strom ist.

3. Installationsgerät nach einem der vorhergehenden Patentansprüche, **dadurch gekennzeichnet, dass** der Parameter die elektrische Leistung ist.

4. Installationsgerät nach einem der vorhergehenden Patentansprüche, **dadurch gekennzeichnet, dass** Schwellwerte für die Abschaltung eines an das Installationsgerät (3) angeschlossenen Verbrauchers (17) in dem Installationsgerät (3) programmierbar sind.

5. Installationsgerät nach einem der vorhergehenden Patentansprüche, **dadurch gekennzeichnet, dass** eine Ermittlung des Stromes berührungslos erfolgt.

6. Installationsgerät nach einem der vorhergehenden Patentansprüche, **dadurch gekennzeichnet, dass** die Übertragung von drahtlosen Signalen (14) mittels Funkwellen erfolgt.

7. Installationsgerät nach einem der vorhergehenden Patentansprüche, **dadurch gekennzeichnet, dass** das Installationsgerät (3) steckbar zwischen einer Steckdose (2) und einem Verbraucher (17) anordenbar ist.

8. Installationsgerät nach einem der vorhergehenden Patentansprüche, **dadurch gekennzeichnet, dass** das Installationsgerät (3) festverdrahtet mit einem Verbraucher (17) verbunden ist.

9. Installationsgerät nach einem der vorhergehenden Patentansprüche, **dadurch gekennzeichnet, dass** mehrere Installationsgeräte (3) in einem Gehäuse angeordnet sind.

10. Gerätesystem für die Gebäudesystemtechnik, bestehend aus einem mehreren elektrischen Geräten (2, 3, 12, 13), wobei ein Installationsgerät (3) gemäß den Patentansprüchen 1 bis 9 verwendet wird und wobei das Installationsgerät (3) mit weiteren Geräten (12, 13) drahtlos kommuniziert.

11. Gerätesystem nach Patentanspruch 10, **dadurch gekennzeichnet, dass** die Parameter an ein Gerät (12) drahtlos übermittelbar und in dem Gerät (12) visualisierbar sind.

12. Gerätesystem nach Patentanspruch 10 oder 11, **dadurch gekennzeichnet, dass** die Parameter an ein Gerät (12) drahtlos übermittelbar und von dem Gerät (12) aus regelbar sind.

13. Gerätesystem nach einem der Patentansprüche 10 bis 12, **dadurch gekennzeichnet, dass** das Gerät (12) eine Bedien- und Anzeigeeinheit (18) mit Bedienelementen und/oder variablen Anzeigemodi aufweist.

14. Gerätesystem nach einem der Patentansprüche 10 bis 13, **dadurch gekennzeichnet, dass** Schwellwerte für die Abschaltung eines an das Installationsgerät (3) angeschlossenen Verbrauchers (17) in dem Installationsgerät (3) und/oder dem Gerät (12) programmierbar sind.
